(19) Europäisches Patentamt
European Patent Office
Office européen des brevets

(11) **EP 2 911 436 B1**

(12) **EUROPEAN PATENT SPECIFICATION**

(45) Date of publication and mention
of the grant of the patent:
**16.01.2019 Bulletin 2019/03**

(21) Application number: **12888513.4**

(22) Date of filing: **14.11.2012**

(51) Int Cl.:
***H04W 36/00*** (2009.01)   *H04W 24/02* (2009.01)

(86) International application number:
**PCT/CN2012/084606**

(87) International publication number:
**WO 2014/075244 (22.05.2014 Gazette 2014/21)**

(54) **METHOD AND USER EQUIPMENT FOR MAKING MEASUREMENT EVENT DECISION**

VERFAHREN UND BENUTZERVORRICHTUNG FÜR MESSEREIGNISENTSCHEIDUNGEN

PROCÉDÉ ET ÉQUIPEMENT UTILISATEUR SERVANT À PRENDRE UNE DÉCISION PORTANT SUR UN ÉVÉNEMENT DE MESURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.08.2015 Bulletin 2015/35**

(73) Proprietor: **Huawei Technologies Co., Ltd.**
**Longgang District**
**Shenzhen, Guangdong 518129 (CN)**

(72) Inventors:
- **LUO, Haiyan**
  **Shenzhen**
  **Guangdong 518129 (CN)**
- **DENG, Tianle**
  **Shenzhen**
  **Guangdong 518129 (CN)**
- **WANG, Xuelong**
  **Shenzhen**
  **Guangdong 518129 (CN)**

(74) Representative: **Epping - Hermann - Fischer**
**Patentanwaltsgesellschaft mbH**
**Schloßschmidstraße 5**
**80639 München (DE)**

(56) References cited:
| | |
|---|---|
| **WO-A1-2012/124552** | **WO-A1-2012/134565** |
| **WO-A1-2013/138997** | **WO-A2-2010/140797** |
| **CN-A- 101 904 126** | **CN-A- 102 215 502** |
| **CN-A- 102 238 568** | **CN-A- 102 714 837** |

- **ERICSSON ET AL: "Aspects on Distributed RRUs with Shared Cell-ID for Heterogeneous Deployments", 3GPP DRAFT; R1-110649_SHARED_CELL_ID, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Taipei, Taiwan; 20110221, 17 February 2011 (2011-02-17), XP050490740, [retrieved on 2011-02-17]**

**Description**

**TECHNICAL FIELD**

Embodiments of the present invention relate to the field of wireless communications, and in particular, to a measurement event decision method and a user equipment.

**BACKGROUND**

In a wireless communications system, a user equipment (UE, User Equipment) performs signal measurement according to different physical cell identifiers (PCI, Physical Cell Identifier) that are of a serving cell and a neighboring cell of the serving cell, and cell-specific reference signals (CRS, Cell-specific reference signals) separately corresponding to these different PCIs. If a signal measurement result meets a measurement event decision condition, the UE reports the measurement result to a base station. The base station evaluates, by using the measurement result reported by the UE, quality of a signal that is of the serving cell or the neighboring cell and is received by the UE, so that the base station performs a cell handover for the UE.

However, in a coordinated multi-point transmission (CoMP, Coordinated Multi-Point transmission) scenario, multiple access points (AP, Access Point) may exist within coverage of a serving cell or a neighboring cell, and these access points have a same PCI. In a case in which an existing measurement event decision is unchanged, the UE can neither make a measurement event decision according to a signal measurement result of each one of the multiple APs of the same PCI, nor report the signal measurement result to the base station for implementation of a cell handover for the UE.

WO 2012/124552 A1 discloses a Channel State Information (CSI) feedback method of a User Equipment (UE), which includes the following steps of: receiving from a Base Station (BS) a Channel State Information-Reference Signal (CSI-RS) measurement set configuration signal which contains an indication of a CSI-RS measurement set configured for a UE; measuring a CSI-RS in the CSI-RS measurement set based on the indication of the CSI-RS measurement set to obtain metric information corresponding to a CSI-RS pattern in the CSI-RS measurement set; obtaining a CSI-RS report set which is selected from the CSI-RS measurement set based on the metric information; determining a CSI feedback resource corresponding to a CSI-RS pattern in the CSI-RS report set; and feeding back CSI corresponding to the CSI-RS pattern in the CSI-RS report set to the BS over the determined CSI feedback resource.

WO 2012/134565 A1 discloses a method for channel state information reference signal (CSI-RS) configuration in distributed remote radio head (RRH) systems, wherein a transmission point selection module can receive a user equipment (UE) signal via a transmission point from a plurality of transmission points sharing a single cell identification. A downlink transmission point can be selected based on the UE signal. The UE can then be configured to report CSI-RS measurements for the selected downlink transmission point.

WO 2010/140797 A2 discloses a method of reporting a measurement result in a wireless communication system, wherein a user equipment receives, from a base station, measurement configuration information comprising a reporting condition for triggering reporting of a measurement result on M component carriers among N component carriers, where M≤N. The user equipment determines whether the reporting condition is satisfied by measuring the N component carriers. If the reporting condition is satisfied, the user equipment reports a measurement result on the M component carriers to the base station.

Ericsson et al.: Aspects on Distributed RRUs with Shared Cell-ID for Heterogeneous Deployments, 3GPP Draft; RI-110649, gives an overview of a new way of introducing a heterogeneous deployment and discusses its benefits and possible standard impact.

WO 2013/138997 A1 (state of the art according to Art. 54 (3) EPC) discloses a method for received signal quality measurement management triggering and reporting. Specifically, a received signal quality range is defined including a best received signal quality as upper border, which is the best received signal quality in a radio resource management measurement among all received signal qualities measured in a received signal quality measurement procedure. The, a report is processed which includes a predetermined number of signal originating points providing a received signal quality at a reference location within the defined received signal quality range.

**SUMMARY**

The invention is set out in the appended set of claims.

Any references in the following description to embodiments, objects, aspects and/or examples which are not covered by the appended claims are considered as not being part of the present invention. Embodiments of the present invention provide a method for determining a measurement result, and a user equipment, which can implement a measurement event decision in a case in which different APs have a same PCI.

A first aspect of the embodiments of the present invention provides a measurement event decision method for a LTE system, where the method includes:

determining, by a UE of the LTE system, a first measurement result of each AP in multiple APs, where the multiple APs of the LTE system have a same physical cell identifier PCI, and the first measurement result is reference signal received power RSRP (RSRP, Reference Signal Received Power) or reference signal received quality RSRQ (RSRQ, Reference Signal Received Quality);

determining, by the UE according to a statistical analysis of the first measurement results of the APs in the multiple APs, a second measurement result of the multiple APs corresponding to the PCI, determining, by the user equipment, whether the second measurement result meets a measurement event decision condition, and sending the first measurement result to a base station of the LTE system for a cell handover decision for the UE according to the first measurement result or sending the second measurement result to the base station after it is determined that the second measurement result meets the measurement event decision condition thereby causing the base station to make a cell handover decision for the UE according to the second measurement result.

Based on the first aspect, in a first possible implementation manner, the RSRP is RSRP obtained by measurement according to a CRS, or channel state information-reference signal received power CSI-RSRP obtained by measurement according to a channel state information (CSI, Channel State Information)-reference signal (RS, Reference Signal), wherein a value of the CSI-RSRP is acquired by performing linear averaging on power obtained on some or all of resource elements that carry a CSI-reference signal from a same CSI-RS configuration set.

Based on the first aspect, in a second possible implementation manner, the RSRQ is RSRQ obtained by measurement according to a CRS, or channel state information-reference signal received quality CSI-RSRQ obtained by measurement according to a CSI-RS, wherein a value of the CSI-RSRQ is acquired according to $N \times$ CSI-RSRP, where N is measurement bandwidth of carrier received signal strength indicator in a wireless communications system, or a value of the CSI-RSRQ is acquired according to $M \times$ CSI-RSRP, where M is a quantity of REs that carry the CSI-RS.

Based on the first aspect, the first possible implementation manner, or the second possible implementation manner, in a third possible implementation manner, the UE determines, according to the first measurement result of each AP in the multiple APs, the second measurement result corresponding to the PCI in one of the following manners, including:

the UE selects a maximum value from a set consisting of the first measurement results of all APs in the multiple APs as the second measurement result corresponding to the PCI; or
the UE selects a weighted sum of the first measurement results of all APs in the multiple APs as the second measurement result corresponding to the PCI; or
the UE selects a mathematical expectation of a set consisting of the first measurement results of all APs in the multiple APs as the second measurement result corresponding to the PCI.

Based on the first aspect, the first possible implementation manner, the second possible implementation manner, or the third possible implementation manner, in a fourth possible implementation manner, the PCI is a PCI of a serving cell, or the PCI is a PCI of a neighboring cell of a serving cell.

A second aspect of the embodiments of the present invention provides a user equipment for a LTE system, including:

a first determining unit, configured to determine a first measurement result of each AP in multiple APs of the LTE system, where the multiple APs have a same physical cell identifier PCI, and the first measurement result is reference signal received power RSRP or reference signal received quality RSRQ;
a second determining unit, configured to determine, according a statistical analysis of to the first measurement results of the APs in the multiple APs, a second measurement result of the multiple APs corresponding to the PCI;
a deciding unit, configured to determine, whether the second measurement result meets a measurement event decision condition; and
a sending unit, configured to report the first measurement result to a base station of the LTE system for a cell handover decision for the UE according to the first measurement result or the second measurement result to the base station subsequent to the deciding unit determining that the second measurement result meets the measurement event decision condition and thereby cause the base station to make a cell handover decision for the UE according to the second measurement result.

Based on the second aspect, in a first possible implementation manner, the first determining unit, is configured to obtain the RSRP by measurement according to a CRS, or CSI-RSRP obtained by measurement according to a CSI-RS, wherein a value of the CSI-RSRP is acquired by performing linear averaging on power obtained on some or all of resource elements that carry a CSI-reference signal from a same CSI-RS configuration set.

Based on the second aspect, in a second possible implementation manner, the first determining unit, is configured to obtain the RSRQ by measurement according to a CRS, or CSI-RSRQ obtained by measurement according to a CSI-RS, wherein a value of the CSI-RSRQ is acquired according to $N \times$ CSI-RSRP, where N is measurement bandwidth of carrier received signal strength indicator in a wireless communications system, or a value of the CSI-RSRQ is acquired according to $M \times$ CSI-RSRP, where M is a quantity of REs that carry the CSI-RS.

Based on the second aspect, the first possible implementation manner, or the second possible implementation manner, in a third possible implementation manner, the second determining unit is specifically configured to determine, according to the first measurement result of each AP in the multiple APs, the second measurement result corresponding to the PCI in one of the following manners, including:

the second determining unit is specifically configured to select a maximum value from a set consisting of the first measurement results of all APs in the multiple APs as the second measurement result corresponding to the PCI; or

the second determining unit is specifically configured to select a weighted sum of the first measurement results of all APs in the multiple APs as the second measurement result corresponding to the PCI; or

the second determining unit is specifically configured to select a mathematical expectation from a set consisting of the first measurement results of all APs in the multiple APs as the second measurement result corresponding to the PCI.

Based on the second aspect, the first possible implementation manner, the second possible implementation manner, or the third possible implementation manner, in a fourth possible implementation manner, the PCI is a PCI of a serving cell, or the PCI is a PCI of a neighboring cell of a serving cell.

By applying the technical solutions provided in the embodiments of the present invention, a UE performs signal measurement on multiple APs having a same PCI, and determines, according to an acquired first measurement result of the multiple APs, a second measurement result corresponding to the same PCI. In a case in which an existing measurement event decision is unchanged, the same PCI still corresponds to a measurement result used for a measurement event decision; the user equipment can make a measurement event decision according to the second measurement result, thereby improving system performance.

**BRIEF DESCRIPTION OF DRAWINGS**

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic flowchart of a measurement event decision method according to an embodiment of the present invention;
FIG. 2 is a schematic structural block diagram of a user equipment according to an embodiment of the present invention;
FIG. 3 is a schematic structural block diagram of a communications system according to an embodiment of the present invention; and
FIG. 4 is a schematic structural diagram of a user equipment according to another embodiment of the present invention.

**DESCRIPTION OF EMBODIMENTS**

The following clearly and completely describes the technical solutions in the embodiments of the present invention with reference to the accompanying drawings in the embodiments of the present invention.

The technical solutions of the present invention may be applied to various communications systems, such as: a Global System for Mobile Communications (GSM, Global System of Mobile Communications), a Code Division Multiple Access (CDMA, Code Division Multiple Access) system, Wideband Code Division Multiple Access (WCDMA, Wideband Code Division Multiple Access) system, a general packet radio service (GPRS, General Packet Radio Service) system, and Long Term Evolution (LTE, Long Term Evolution) system.

A user equipment, also referred to as a mobile terminal (Mobile Terminal), a mobile user equipment, and the like, may communicate with one or more core networks through a radio access network (RAN, Radio Access Network). The UE may be a mobile terminal, such as a mobile phone (also referred to as a "cellular" phone) and a computer with a mobile terminal. For example, the user equipment may be a portable, pocket-sized, handheld, computer built-in, or in-vehicle mobile apparatus, which exchanges voice and/or data with the radio access network.

A base station may be a base station (BTS, Base Transceiver Station) in the GSM or CDMA, may also be a base station (NodeB) in the WCDMA, and may further be an evolved base station (eNB or e-NodeB, evolved Node B) in the LTE, which is not limited in the present invention.

In the embodiments of the present invention, sharing of a Channel and data information among multiple access points can be implemented by using a CoMP technology, which effectively improves performance of an entire cell. A CoMP application scenario (Scenario) may be classified into four types:

scenario 1: intra-site CoMP (intra-site CoMP) in a homogeneous network (homogeneous network);
scenario 2: a homogeneous network withing a remote radio head (RRH, Remote Radio Head) with high transmit power;
scenario 3: a heterogeneous network (Heterogeneous network) that has an RRH with low transmit power and is within coverage of a macro base station (Macro cell), where each RRH has a physical cell identifier (PCI, Physical Cell Identifier) different from that of the macro base station; and

scenario 4: a heterogeneous network that has an RRH with low transmit power and is within coverage of a macro base station, where each RRH has a same physical cell identifier as the macro base station.

With wide application of a remote radio technology, for example, in CoMP scenario 4, multiple APs may exist within coverage of a serving cell, and these APs have a same PCI as the serving cell. In an existing process of a measurement event decision of a UE, a same PCI corresponds to one measurement result; as a result, the UE can neither make a measurement event decision on a signal measurement result of each one of these APs, nor report, in a case in which a measurement event decision condition is met, the signal measurement result to a base station for a cell handover.

In the embodiments of the present invention, an AP may be various network nodes, including but not limited to an RRH, a remote radio unit (RRU, Remote Radio Unit), a relay station, a base station, and the like.

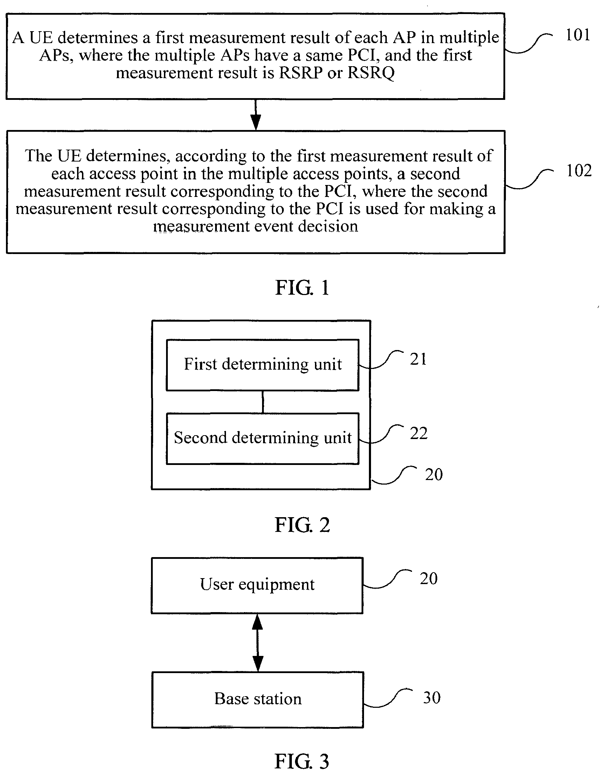

FIG. 1 is a schematic flowchart of a measurement event decision method according to an embodiment of the present invention.

101. A UE determines a first measurement result of each AP in multiple APs, where the multiple APs have a same PCI, and the first measurement result is RSRP or RSRQ.

Optionally, the RSRP is RSRP obtained by measurement according to a CRS, or CSI-RSRP obtained by measurement according to a CSI-RS.

Optionally, the RSRQ is RSRQ obtained by measurement according to a CRS, or CSI-RSRQ obtained by measurement according to a CSI-RS.

In this embodiment of the present invention, definitions of the CSI-RSRP and the CSI-RSRQ are as follows:

Definition of the CSI-RSRP: A value of the CSI-RSRP is acquired by performing linear averaging on power obtained on some or all of resource elements that carry a CSI-reference signal from a same CSI-RS configuration set.

Definition of the CSI-RSRQ: A value of the CSI-RSRQ is acquired according to N×CSI-RSRP/(a received signal strength indicator obtained by measurement on measurement bandwidth), where N is measurement bandwidth of carrier received signal strength indicator (RSSI, Received Signal Strength Indicator) in a wireless communications system, for example, in an E-UTRA (Evolved Universal Terrestrial Radio Access, evolved universal mobile telecommunications system terrestrial radio access); or a value of the CSI-RSRQ is acquired according to M×CSI-RSRP/(an RSSI obtained by measurement on all resource elements (RE, Resource Element) that carry a CSI-RS), where M is a quantity of REs that carry the CSI-RS.

Different CSI-RSs may be configured for the multiple APs having the same PCI. These different CSI-RSs have different CSI-reference signaling configuration index numbers, different frequency domain resource configurations, different code domain resource configurations, different antenna port numbers, and/or different subframe configurations. That is, in a CoMP scenario, a same PCI does not only correspond to one type of CRS, but may also correspond to one or more types of CSI-RS configurations. Therefore, the UE may perform measurement for one or more APs with the same PCI by using the CRS or CSI-RS configuration information corresponding to the same PCI, so as to acquire the first measurement result.

102. The UE determines, according to the first measurement result of each AP in the multiple APs, a second measurement result corresponding to the PCI, where the second measurement result corresponding to the PCI is used for the UE to make a measurement event decision.

Optionally, that the UE determines, according to the first measurement result of each AP in the multiple APs, the second measurement result corresponding to the PCI includes the following: the UE performs a statistical analysis on the first measurement result of each AP in the multiple APs, and obtains the second measurement result of the multiple APs after the statistical analysis. The statistical analysis method may be preset by the UE, and may also be delivered by a base station or a network management system (for example, a management network element OAM (Operation Administration and Maintenance, operation, administration and maintenance)).

A person skilled in the art may understand that the statistical analysis method may include median filtering, Wiener filtering, arithmetic mean filtering, or the like.

In an example, the statistical analysis method may include one of the following manners:

the user equipment selects a maximum value from a set consisting of the first measurement results of all APs in the multiple APs as the second measurement result corresponding to the PCI, for example, $f(x_i | i \in S) = \max\{x_i | i \in S\}$; or

the user equipment selects a weighted sum of the first measurement results of all APs in the multiple APs as the second measurement result corresponding to the PCI, for example,

$$f(x_i \mid i \in S) = \sum_{i \in S} C x_i$$ (C is a weighted value, where the weighted value may be determined according to a noise reduction characteristic required for xi, and C may be a function of xi, or may be a constant, for example, C is 1); or

the user equipment selects a mathematical expectation of a set consisting of the first measurement results of all APs in the multiple APs as the second measurement result corresponding to the PCI, for example, $f(x_i \mid i \in S) = \sum_{i \in S} x_i / |S|$.

S is a set consisting of the multiple APs; xi is a first measurement result of an ith AP in the multiple APs (a unit of xi is milliwatt); and |S| indicates a quantity of the multiple APs in the set S.

In an example, if an AP whose signal is strongest is to be selected, from a CoMP set, to send a physical downlink shared Channel (PDSCH, Physical Downlink Shared Channel) to the UE, the statistical analysis method may be $f(x_i \mid i \in S) = \max\{x_i \mid i \in S\}$. If all APs in the CoMP set send the PDSCH to the UE at the same time, the statistical analysis method may be

$$f(x_i \mid i \in S) = \sum_{i \in S} x_i$$   If all the APs in the CoMP set take turns to send the PDSCH to the UE, the statistical analysis method may be $f(x_i \mid i \in S) = \sum_{i \in S} x_i / |S|$.

Optionally, the same PCI that the multiple APs have may be a PCI of a serving cell; correspondingly, the first measurement result and second measurement result are results of measurement performed by the UE on the serving cell. The same PCI that the multiple APs have may also be a PCI of a neighboring cell; correspondingly, the first measurement result and second measurement result are results of measurement performed by the UE on the neighboring cell.

Further, if the serving cell and the neighboring cell have different PCIs, the UE may obtain a first measurement result and second measurement result of multiple APs of the serving cell, and may also obtain a first measurement result and second measurement result of multiple APs of the neighboring cell. If the UE determines that the second measurement result of the serving cell and the second measurement result of the neighboring cell meet a measurement event decision condition, the UE reports, to the base station, the first measurement result or second measurement result of the multiple APs of the serving cell, and the first measurement result or second measurement result of the multiple APs of the neighboring cell, and the base station may determine whether to perform a cell handover. Further, when the UE reports the first measurement results to the base station, the base station may make a cell handover decision for the UE according to the first measurement results, and select, for the UE after handing the UE over to a target cell, an AP providing a best service for the UE. When the UE reports the second measurement results to the base station, an amount of data reported by the UE is relatively small and does not affect user experience of the UE (especially experience of a user of a high priority, for example, experience of a VIP user); the base station may make a cell handover decision for the UE according to the second measurement results, and hand the UE over to the target cell.

Still further, this embodiment of the present invention may also be applied to such a scenario in which the serving cell or the neighboring cell does not have multiple APs. In this case, one serving cell or neighboring cell is equivalent to one AP, and there is one element in the set S.

In this embodiment of the present invention, the multiple APs have the same PCI; therefore, the first measurement result of each one of the multiple APs corresponds to the same PCI. In the existing process of a measurement event decision, the UE cannot make a measurement event decision according to the first measurement result of the multiple APs having the same PCI. For example, the serving cell and the neighboring cell have different PCIs, the serving cell has multiple APs, the multiple APs and the serving cell have a same PCI, and then, the UE may obtain by measurement the first measurement result of the multiple APs; the neighboring cell also has multiple APs, the multiple APs and the neighboring cell have a same PCI, and then, the UE may also obtain by measurement the first measurement result of the multiple APs. However, in the existing process of a measurement event decision, one PCI corresponds to one measurement result, so that a UE cannot make a measurement event decision according to multiple first measurement results corresponding to a same PCI.

By applying the technical solution provided in this embodiment of the present invention, a UE performs signal measurement on multiple APs having a same PCI, and determines, according to an acquired first measurement result of the multiple APs, a second measurement result of the multiple APs having the same PCI. The UE can make a measurement event decision according to the second measurement result of the multiple APs, and a same PCI still corresponds to one measurement result or one type of measurement result for the measurement event decision, so that in a case in which an existing measurement event decision is unchanged, the UE can make the measurement event decision according to the second measurement result, thereby improving system performance. Further, the technical solution provided in this embodiment of the present invention may also be applied to a scenario in which a serving cell or a neighboring cell do not have multiple APs, thereby implementing application of the technical solution in the existing scenario, and reducing a cost of system maintenance.

FIG. 2 is a schematic block diagram of a user equipment according to an embodiment of the present invention. A user equipment 20 in FIG. 2 includes a first determining unit 21 and a second determining unit 22.

The first determining unit 21 is configured to determine a first measurement result of each AP in multiple APs, where the multiple APs have a same PCI, and the first measurement result is RSRP or RSRQ.

Optionally, the RSRP is RSRP obtained by measurement according to a CRS, or CSI-RSRP obtained by measurement according to a CSI-RS.

Optionally, the RSRQ is RSRQ obtained by measurement according to a CRS, or CSI-RSRQ obtained by measurement according to a CSI-RS.

The second determining unit 22 is configured to determine, according to the first measurement result of each AP in the multiple APs, a second measurement result corresponding to the PCI, where the second measurement result corresponding to the PCI is used to make a measurement event decision.

In a possible implementation manner, the second determining unit is specifically configured to perform a statistical analysis on the first measurement result of each AP in the multiple APs, and obtain the second measurement result of the multiple APs after the statistical analysis. The statistical analysis method may be preset by the user equipment, and may also be delivered by a base station or a network management system (for example, OAM).

In an example, the statistical analysis method may include one of the following manners:

the second determining unit 22 is specifically configured to select a maximum value from a set consisting of the first measurement results of all APs in the multiple APs as the second measurement result corresponding to the PCI, for example, $f(x_i|i \in S) = \max\{x_i|i \in S\}$; or

the second determining unit 22 is specifically configured to select a weighted sum of the first measurement results of all APs in the multiple APs as the second measurement result corresponding to the PCI, for example, $f(x_i \mid i \in S) = \sum_{i \in S} Cx_i$ (C is a weighted value, where the weighted value may be determined according to a noise reduction characteristic required for xi, and C may be a function of xi, or may be a constant, for example, C is 1); or

the second determining unit 22 is specifically configured to select a mathematical expectation from a set consisting of the first measurement results of all APs in the multiple APs as the second measurement result corresponding to the PCI, for example,

$$f(x_i \mid i \in S) = \sum_{i \in S} x_i / |S|$$
.

S is a set consisting of the multiple APs; xi is a first measurement result of an ith AP in the multiple APs (a unit of xi is milliwatt); and |S| indicates a quantity of the multiple APs in the set S.

In an example, if an AP whose signal is strongest needs to be selected, from a CoMP set, to send a physical downlink shared channel (PDSCH, Physical Downlink Shared Channel) to the UE, the statistical analysis method may be $f(x_i|i \in S) = \max\{x_i|i \in S\}$. If all APs in the CoMP set send the PDSCH to the UE at the same

time, $f(x_i \mid i \in S) = \sum_{i \in S} x_i$ may be selected as the statistical analysis method. If all the APs in the CoMP set take turns to send the PDSCH to the UE, the statistical analysis method may be $f(x_i \mid i \in S) = \sum_{i \in S} x_i / |S|$
.

Optionally, the PCI of the multiple APs is a PCI of a serving cell, or the PCI of the APs is a PCI of a neighboring cell of a serving cell.

Further, the user equipment 20 may further include:

a deciding unit 23, configured to determine, whether the second measurement result meets a measurement event decision condition; and
a sending unit 24, configured to report the first measurement result or the second measurement result to the base station after the deciding unit 23 determines that the second measurement result meets the measurement event decision condition.

Further, when the user equipment 20 reports the first measurement result to the base station, the base station may make a cell handover decision for the UE according to the first measurement result, and select, for the UE after handing the user equipment 20 over to a target cell, an AP providing a best service for the UE. When the user equipment 20 reports the second measurement result to the base station, an amount of data reported by the user equipment 20 may be relatively small and does not affect user experience of the UE (especially experience of a user of a high priority, for example, experience of a VIP user); the base station may make a cell handover decision for the UE according to the second measurement result, and hand the UE over to the target cell.

The user equipment 20 provided in this embodiment of the present invention can perform an action in the method embodiment shown in FIG. 1. Accordingly, the first determining unit 21 and the second determining unit 22 may be integrated together; if the user equipment 20 further includes the deciding unit 23 and the sending unit 24, the first determining unit 21, the second determining unit 22, the deciding unit 23, and the sending unit 24 may be integrated together, and may also be respectively used as mutually independent hardware entities. A concept and a process described in the method embodiment shown in FIG. 1 are applicable to the UE provided in this embodiment of the present invention. For details, reference may be made to the method embodiment shown in FIG. 1.

By applying the technical solution provided in this embodiment of the present invention, a UE performs signal measurement on multiple APs having a same PCI, and determines, according to an acquired first measurement result of the multiple APs, a second measurement result corresponding to the same PCI. The UE can make a measurement event decision according to the second measurement result corresponding to the same PCI, and a same PCI still corresponds to one measurement result or one type of measurement result for the measurement event decision, so that in a case in which an existing measurement event decision is unchanged, the UE can make the measurement event decision according to the second measurement result, thereby improving system performance. Further, the technical solution provided in this embodiment of the present invention may also be applied to a scenario in which a serving cell or a neighboring cell do not have multiple APs, thereby implementing application of the technical solution in the existing scenario, and reducing a cost of system maintenance.

An embodiment of the present invention further provides a communications system, and as shown in FIG. 3, the system includes the user equipment 20 and a base station 30. For details of the user equipment 20, reference may be made to the embodiment shown in FIG. 2. The base station 30 is configured to receive a first measurement result or second measurement result that is sent by the user equipment and is of a serving cell, and a first measurement result or second measurement result that is sent by the user equipment and is of a neighboring cell, and make a cell handover decision according to the first measurement result or second measurement result of the serving cell, and the first measurement result or second measurement result of the neighboring cell.

By applying the communications system, a UE performs signal measurement on multiple APs having a same PCI, and determines, according to an acquired first measurement result of the multiple APs, a second measurement result of the multiple APs having the same PCI. The UE can make a measurement event decision according to the second measurement result of the multiple APs, and a same PCI still corresponds to one measurement result or one type of measurement result for the measurement event decision, so that in a case in which an existing measurement event decision is unchanged, the UE can make the measurement event decision according to the second measurement result. The UE can report the first measurement result or second measurement result of the serving cell, and the first measurement result or second measurement result of the neighboring cell, to a base station, thereby implementing a cell handover decision.

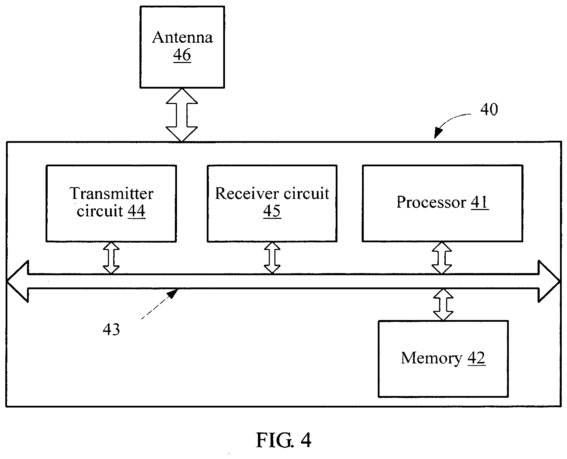

FIG. 4 is a schematic block diagram of a user equipment according to another embodiment of the present invention. A user equipment 40 in FIG. 4 includes a processor 41 and a memory 42. The processor 41 is connected to the memory 42 by using a bus system 43.

The memory 42 is configured to store instruction code of the following operations: determining a first measurement result of each AP in multiple APs, where the multiple APs have a same physical cell identifier PCI, and the first measurement result is RSRP or RSRQ; and determining, according to the first measurement result of each AP in the multiple APs, a second measurement result corresponding to the PCI, where the second measurement result corresponding to the PCI is used for the user equipment to make a measurement event decision.

Optionally, the RSRP is RSRP obtained by measurement according to a CRS, or CSI-RSRP obtained by measurement according to a CSI-RS.

Optionally, the RSRQ is RSRQ obtained by measurement according to a CRS, or CSI-RSRQ obtained by measurement according to a CSI-RS.

Optionally, that the user equipment 40 determines, according to the first measurement result of each AP in the multiple APs, a second measurement result of the multiple APs includes the following: the user equipment performs a statistical analysis on the first measurement result of each AP in the multiple APs, and obtains the second measurement result of the multiple APs after the statistical analysis.

In an example, the statistical analysis method may include one of the following manners:

the user equipment 40 selects a maximum value from a set consisting of the first measurement results of all APs in the multiple APs as the second measurement result corresponding to the PCI, for example, $f(x_i|i \in S) = \max\{x_i|i \in S\}$; or

the user equipment 40 selects a weighted sum of the first measurement results of all APs in the multiple APs as the second measurement result corresponding to the PCI, for example,

$$f(x_i \mid i \in S) = \sum_{i \in S} C x_i$$ (C is a weighted value, where the weighted value may be determined according to a noise reduction characteristic required for xi, and C may be a function of xi, or may be a constant, for example, C is 1); or

the user equipment 40 selects a mathematical expectation of a set consisting of the first measurement results of all APs in the multiple APs as the second measurement result corresponding to the PCI, for

example, $$f(x_i \mid i \in S) = \sum_{i \in S} x_i / |S|$$.

S is a set consisting of the multiple APs; xi is a first measurement result of an ith AP in the multiple APs (a unit of xi is milliwatt); and |S| indicates a quantity of the multiple APs in the set S.

Optionally, the PCI is a PCI of a serving cell, or the PCI is a PCI of a neighboring cell of a serving cell.

The processor 41 is configured to execute the instruction code stored in the memory 42.

Optionally, the user equipment 40 may further include a transmitter circuit 44, a receiver circuit 45, an antenna 46, and the like. The processor 41 controls an operation of the user equipment 40, and the processor 41 may also be referred to as a CPU (Central Processing Unit, central processing unit). The memory 42 may include a read-only memory and a random access memory, and provides instruction code and data to the processor 41, and the memory 42 may further include a non-volatile random access memory (NVRAM). In a specific application, the transmitter circuit 44 and the receiver circuit 45 may be coupled into the antenna 46. All components of the user equipment 40 are coupled together by using the bus system 43, where the bus system 43 includes a data bus, and may further include a power bus, a control bus, a status signal bus, and the like. However, for clarity of description, various buses are marked as the bus system 43 in the figure.

The method according to an embodiment of the present invention shown in FIG. 1 may be stored in the memory 42 as program code, and executed by the processor 41. The processor 41 may be an integrated circuit chip and exhibits signal processing capabilities. In an implementation, the steps of the foregoing method may be implemented by an integrated logical circuit of hardware in the processor 41, or by an instruction in a software form. The foregoing processor 41 may be a general purpose processor, a digital signal processor (DSP), an application-specific integrated circuit (ASIC), a field programmable gate array (FPGA) or another programmable logical component, a discrete gate or transistor logic device, a discrete hardware component. The processor may implement or execute methods, steps and logical block diagrams disclosed in the embodiments of the present invention. The general purpose processor may be a microprocessor, or the processor may also be any conventional processor or the like. Steps of the methods disclosed with reference to the embodiments of the present invention may be directly executed and accomplished by means of a hardware decoding processor, or may be executed and accomplished by using a combination of hardware and software modules in the decoding processor. The software module may be located in a mature storage medium in the field, such as a random access memory, a flash memory, a read-only memory, a programmable read-only memory, an electrically-erasable programmable memory or a register. The storage medium is located in the memory 42. The processor 41 reads information from the memory 42, and completes the steps of the foregoing methods in combination with the hardware of the processor 41.

The memory 42 according to this embodiment of the present invention may store program code corresponding to the actions described in the method embodiment shown in FIG. 1, and a concept and a process disclosed in the method embodiment shown in FIG. 1 are applicable to this embodiment of the present invention.

By applying the technical solution provided in this embodiment of the present invention, a UE performs signal measurement on multiple APs having a same PCI, and determines, according to an acquired first measurement result of the multiple APs, a second measurement result corresponding to the same PCI. The UE can make a measurement event decision according to the second measurement result corresponding to the same PCI, and a same PCI still corresponds to one measurement result or one type of measurement result for the measurement event decision, so that in a case in which an existing measurement event decision is unchanged, the UE can make the measurement event decision according to the second measurement result. Further, the technical solution provided in this embodiment of the present invention may also be applied to a scenario in which a serving cell or a neighboring cell do not have multiple APs, thereby implementing application of the technical solution in the existing scenario, and reducing a cost of system maintenance.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each one of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention.

**Claims**

1. A measurement event decision method for a LTE system, comprising:

   determining (101), by a user equipment UE (20) of the LTE system, a first measurement result of each access point, AP, in multiple APs of the LTE system, wherein the multiple access points have a same physical cell identifier, PCI, and the first measurement result is reference signal received power RSRP or reference signal received quality, RSRQ ; and
   determining (102), by the user equipment according to a statistical analysis of the first measurement results of the access points in the multiple APs, a second measurement result of the multiple APs corresponding to the PCI,
   determining, by the user equipment, whether the second measurement result meets a measurement event decision condition, and
   sending the first measurement result to a base station (30) of the LTE system for a cell handover decision for the UE according to the first measurement result or sending the second measurement result to the base station after it is determined that the second measurement result meets the measurement event decision condition thereby causing the base station to make a cell handover decision for the UE according to the second measurement result.

2. The method according to claim 1, wherein the RSRP is RSRP obtained by measurement according to a cell-specific reference signal, CRS, or channel state information-reference signal received power, CSI-RSRP, obtained by measurement according to a channel state information-reference signal, CSI-RS, wherein a value of the CSI-RSRP is acquired by performing linear averaging on power obtained on some or all of resource elements that carry a CSI-reference signal from a same CSI-RS configuration set.

3. The method according to claim 1, wherein the RSRQ is RSRQ obtained by measurement according to a cell-specific reference signal, CRS, or channel state information-reference signal received quality, CSI-RSRQ, obtained by measurement according to a channel state information-reference signal, CSI-RS, wherein a value of the CSI-RSRQ is acquired according to $N \times$ CSI-RSRP, where N is measurement bandwidth of carrier received signal strength indicator in a wireless communications system, or a value of the CSI-RSRQ is acquired according to $M \times$ CSI-RSRP, where M is a quantity of REs that carry the CSI-RS.

4. The method according to any one of claims 1 to 3, wherein the user equipment determines (102), according to the first measurement result of each access point, AP, in the multiple access points, the second measurement result corresponding to the PCI in one of the following manners:

   the user equipment selects a maximum value from a set consisting of the first measurement results of all APs in the multiple APs as the second measurement result corresponding to the PCI; or
   the user equipment selects a weighted sum of the first measurement results of all APs in the multiple APs as the second measurement result corresponding to the PCI; or
   the user equipment selects a mathematical expectation of a set consisting of the first measurement results of all APs in the multiple APs as the second measurement result corresponding to the PCI.

5. The method according to any one of claims 1 to 4, wherein the PCI is a PCI of a serving cell, or the PCI is a PCI of a neighboring cell of a serving cell.

6. A user equipment UE (20) of a LTE system, comprising:

a first determining unit (21), configured to determine a first measurement result of each access point, AP, in multiple APs of the LTE system, wherein the multiple access points have a same physical cell identifier, PCI, and the first measurement result is reference signal received power, RSRP, or reference signal received quality, RSRQ;

a second determining unit (22), configured to determine, according to a statistical analysis of the first measurement results of the APs in the multiple access points, a second measurement result of the multiple APs corresponding to the PCI;

a deciding unit (23), configured to determine, whether the second measurement result meets a measurement event decision condition; and

a sending unit (24), configured to report the first measurement result to a base station (30) of the LTE system for a cell handover decision for the UE according to the first measurement result or the second measurement result to the base station subsequent to the deciding unit (23) determining that the second measurement result meets the measurement event decision condition and thereby cause the base station to make a cell handover decision for the UE according to the second measurement result.

7. The user equipment according to claim 6, wherein the first determining unit (21), is configured to obtain the RSRP by measurement according to a cell-specific reference signal, CRS, or channel state information-reference signal received power, CSI-RSRP, obtained by measurement according to a channel state information-reference signal, CSI-RS, wherein a value of the CSI-RSRP is acquired by performing linear averaging on power obtained on some or all of resource elements that carry a CSI-reference signal from a same CSI-RS configuration set.

8. The user equipment according to claim 6, wherein the first determining unit (21), is configured to obtain the RSRQ by measurement according to a cell-specific reference signal, CRS, or channel state information-reference signal received quality, CSI-RSRQ, obtained by measurement according to a channel state information-reference signal, CSI-RS, wherein a value of the CSI-RSRQ is acquired according to $N\times$CSI-RSRP, where N is measurement bandwidth of carrier received signal strength indicator in a wireless communications system, or a value of the CSI-RSRQ is acquired according to $M\times$CSI-RSRP, where M is a quantity of REs that carry the CSI-RS.

9. The user equipment according to any one of claims 6 to 8, wherein the second determining unit (22) is specifically configured to determine, according to the first measurement result of each access point, AP, in the multiple access points, the second measurement result corresponding to the PCI in one of the following manners:

the second determining unit (22) is specifically configured to select a maximum value from a set consisting of the first measurement results of all APs in the multiple APs as the second measurement result corresponding to the PCI; or

the second determining unit (22) is specifically configured to select a weighted sum of the first measurement results of all APs in the multiple APs as the second measurement result corresponding to the PCI; or

the second determining unit (22) is specifically configured to select a mathematical expectation from a set consisting of the first measurement results of all APs in the multiple APs as the second measurement result corresponding to the PCI.

10. The user equipment according to claims 6 to 9, wherein the PCI is a PCI of a serving cell, or the PCI is a PCI of a neighboring cell of a serving cell.

11. A LTE communications system, comprising a user equipment (20) according to any one of claims 6 to 10 and a base station (30), wherein,
the base station (30) is configured to receive a first measurement result of a serving cell or second measurement result of a serving cell from the user equipment (20), and
the base station (30) is configured to receive a first measurement result of a neighboring cell or second measurement result of a neighboring cell from the user equipment (20), and
the base station (30) is configured to make a cell handover decision according to the first measurement result or second measurement result of the serving cell, and the first measurement result or second measurement result of the neighboring cell.

**Patentansprüche**

1. Messereignisentscheidungsverfahren für ein LTE-System, umfassend:

Bestimmen (101), durch ein Benutzergerät bzw. UE (20) des LTE-Systems, eines ersten Messergebnisses jedes Zugangspunkts bzw. AP in mehreren APs des LTE-Systems, wobei die mehreren Zugangspunkte dieselbe physische Zellkennung bzw. PCI aufweisen und das erste Messergebnis eine Referenzsignalempfangsleistung bzw. RSRP oder eine Referenzsignalempfangsqualität bzw. RSRQ ist; und

Bestimmen (102), durch das Benutzergerät gemäß einer statistischen Analyse der ersten Messergebnisse der Zugangspunkte in den mehreren APs, eines zweiten Messergebnisses der mehreren APs entsprechend der PCI,

Bestimmen, durch das Benutzergerät, ob das zweite Messergebnis eine Messereignisentscheidungsbedingung erfüllt, und

Senden des ersten Messergebnisses zu einer Basisstation (30) des LTE-Systems für eine Zellen-Handover-Entscheidung für das UE gemäß dem ersten Messergebnis oder Senden des zweiten Messergebnisses zu der Basisstation, nachdem bestimmt wird, dass das zweite Messergebnis die Messereignisentscheidungsbedingung erfüllt, wodurch bewirkt wird, dass die Basisstation eine Zellen-Handover-Entscheidung für das UE gemäß dem zweiten Messergebnis vornimmt.

2. Verfahren nach Anspruch 1, wobei die RSRP eine RSRP, die durch eine Messung gemäß einem zellenspezifischen Referenzsignal bzw. CRS erhalten wird, oder eine Kanalzustandsinformationen-Referenzsignalempfangsleistung bzw. CSI-RSRP, die durch eine Messung gemäß einem Kanalzustandsinformationen-Referenzsignal bzw. CSI-RS erhalten wird, ist, wobei ein Wert der CSI-RSRP erfasst wird, indem eine lineare Mittelwertbildung an der Leistung durchgeführt wird, die auf manchen oder allen Ressourcenelementen, die ein CSI-Referenzsignal von demselben CSI-RS-Konfigurationssatz führen, erhalten wird.

3. Verfahren nach Anspruch 1, wobei die RSRQ eine RSRQ, die durch eine Messung gemäß einem zellenspezifischen Referenzsignal bzw. CRS erhalten wird, oder eine Kanalzustandsinformationen-Referenzsignalempfangsqualität bzw. CSI-RSRQ, die durch eine Messung gemäß einem Kanalzustandsinformationen-Referenzsignal bzw. CSI-RS erhalten wird, ist, wobei ein Wert der CSI-RSRQ gemäß NxCSI-RSRP erfasst wird, wobei N eine Messbandbreite eines Träger-Empfangssignalstärkenindikators in einem Drahtloskommunikationssystem ist, oder ein Wert der CSI-RSRQ gemäß MxCSI-RSRP erfasst wird, wobei M eine Menge von REs ist, die das CSI-RS führen.

4. Verfahren nach einem der Ansprüche 1 bis 3, wobei das Benutzergerät, gemäß dem ersten Messergebnis jedes Zugangspunkts bzw. AP in den mehreren Zugangspunkten, das zweite Messergebnis entsprechend der PCI auf eine der folgenden Weisen bestimmt (102):

das Benutzergerät wählt einen Maximalwert aus einem Satz, der aus den ersten Messergebnissen aller APs in den mehreren APs besteht, als das zweite Messergebnis entsprechend der PCI aus; oder

das Benutzergerät wählt eine gewichtete Summe der ersten Messergebnisse aller APs in den mehreren APs als das zweite Messergebnis entsprechend der PCI aus; oder

das Benutzergerät wählt einen mathematischen Erwartungswert eines Satzes, der aus den ersten Messergebnissen aller APs in den mehreren APs besteht, als das zweite Messergebnis entsprechend der PCI aus.

5. Verfahren nach einem der Ansprüche 1 bis 4, wobei die PCI eine PCI einer versorgenden Zelle ist oder die PCI eine PCI einer Nachbarzelle einer versorgenden Zelle ist.

6. Benutzergerät bzw. UE (20) eines LTE-Systems, umfassend:

eine erste Bestimmungseinheit (21), die ausgelegt ist zum Bestimmen eines ersten Messergebnisses jedes Zugangspunkts bzw. AP in mehreren APs des LTE-Systems, wobei die mehreren Zugangspunkte dieselbe physische Zellkennung bzw. PCI aufweisen und das erste Messergebnis eine Referenzsignalempfangsleistung bzw. RSRP oder eine Referenzsignalempfangsqualität bzw. RSRQ ist; und

eine zweite Bestimmungseinheit (22), die ausgelegt ist zum Bestimmen, gemäß einer statistischen Analyse der ersten Messergebnisse der APs in den mehreren Zugangspunkten, eines zweiten Messergebnisses der mehreren APs entsprechend der PCI;

eine Entscheidungseinheit (23), die ausgelegt ist zum Bestimmen, ob das zweite Messergebnis eine Messereignisentscheidungsbedingung erfüllt, und

eine Sendeeinheit (24), die ausgelegt ist zum Melden des ersten Messergebnisses zu einer Basisstation (30) des LTE-Systems für eine Zellen-Handover-Entscheidung für das UE gemäß dem ersten Messergebnis oder dem zweiten Messergebnis zu der Basisstation, im Anschluss daran, dass die Entscheidungseinheit (23) bestimmt, dass das zweite Messergebnis die Messereignisentscheidungsbedingung erfüllt, und wodurch bewirkt wird, dass die Basisstation eine Zellen-Handover-Entscheidung für das UE gemäß dem zweiten Messergebnis vornimmt.

7. Benutzergerät nach Anspruch 6, wobei die erste Bestimmungseinheit (21) ausgelegt ist zum Erhalten der RSRP durch eine Messung gemäß einem zellenspezifischen Referenzsignal bzw. CRS oder einer Kanalzustandsinformationen-Referenzsignalempfangsleistung bzw. CSI-RSRP, die durch eine Messung gemäß einem Kanalzustandsinformationen-Referenzsignal bzw. CSI-RS erhalten wird, wobei ein Wert der CSI-RSRP erfasst wird, indem eine lineare Mittelwertbildung an der Leistung durchgeführt wird, die auf manchen oder allen Ressourcenelementen, die ein CSI-Referenzsignal von demselben CSI-RS-Konfigurationssatz fuhren, erhalten wird.

8. Benutzergerät nach Anspruch 6, wobei die erste Bestimmungseinheit (21) ausgelegt ist zum Erhalten der RSRQ durch eine Messung gemäß einem zellenspezifischen Referenzsignal bzw. CRS oder einer Kanalzustandsinformationen-Referenzsignalempfangsqualität bzw. CSI-RSRQ, die durch eine Messung gemäß einem Kanalzustandsinformationen-Referenzsignal bzw. CSI-RS erhalten wird, wobei ein Wert der CSI-RSRQ gemäß NxCSI-RSRP erfasst wird, wobei N eine Messbandbreite eines Träger-Empfangssignalstärkenindikators in einem Drahtloskommunikationssystem ist, oder ein Wert der CSI-RSRQ gemäß MxCSI-RSRP erfasst wird, wobei M eine Menge von REs ist, die das CSI-RS führen.

9. Benutzergerät nach einem der Ansprüche 6 bis 8, wobei die zweite Bestimmungseinheit (22) spezifisch ausgelegt ist zum Bestimmen, gemäß dem ersten Messergebnis jedes Zugangspunkts bzw. AP in den mehreren Zugangspunkten, des zweiten Messergebnisses entsprechend der PCI auf eine der folgenden Weisen:

die zweite Bestimmungseinheit (22) ist spezifisch ausgelegt zum Auswählen eines Maximalwerts aus einem Satz, der aus den ersten Messergebnissen aller APs in den mehreren APs besteht, als das zweite Messergebnis entsprechend der PCI; oder
die zweite Bestimmungseinheit (22) ist spezifisch ausgelegt zum Auswählen einer gewichteten Summe der ersten Messergebnisse aller APs in den mehreren APs als das zweite Messergebnis entsprechend der PCI; oder
die zweite Bestimmungseinheit (22) spezifisch ausgelegt zum Auswählen eines mathematischen Erwartungswerts aus einem Satz, der aus den ersten Messergebnissen aller APs in den mehreren APs besteht, als das zweite Messergebnis entsprechend der PCI.

10. Benutzergerät nach einem der Ansprüche 6 bis 9, wobei die PCI eine PCI einer versorgenden Zelle ist oder die PCI eine PCI einer Nachbarzelle einer versorgenden Zelle ist.

11. LTE-Kommunikationssystemen, umfassend ein Benutzergerät (20) nach einem der Ansprüche 6 bis 10 und eine Basisstation (30), wobei
die Basisstation (30) ausgelegt ist zum Empfangen eines ersten Messergebnisses einer versorgenden Zelle oder eines zweiten Messergebnisses einer versorgenden Zelle vom Benutzergerät (20), und
die Basisstation (30) ausgelegt ist zum Empfangen eines ersten Messergebnisses einer Nachbarzelle oder eines zweiten Messergebnisses einer Nachbarzelle vom Benutzergerät (20), und
die Basisstation (30) ausgelegt ist zum Vornehmen einer Zellen-Handover-Entscheidung gemäß dem ersten Messergebnis oder dem zweiten Messergebnis der versorgenden Zelle und dem ersten Messergebnis oder dem zweiten Messergebnis der Nachbarzelle.

## Revendications

1. Procédé de décision d'événement de mesure pour un système LTE, consistant :

à déterminer (101), au moyen d'un équipement utilisateur (UE) (20) du système LTE, un premier résultat de mesure de chaque point d'accès (AP) dans de multiples points d'accès du système LTE, dans lequel les multiples points d'accès ont un même identifiant de cellule physique (PCI) et le premier résultat de mesure est une puissance reçue de signal de référence (RSRP) ou une qualité reçue de signal de référence (RSRQ) ; et
à déterminer (102), au moyen de l'équipement utilisateur en fonction d'une analyse statistique des premiers résultats de mesure des points d'accès dans les multiples points d'accès, un second résultat de mesure des multiples points d'accès correspondant à l'identifiant PCI,
à déterminer, au moyen de l'équipement utilisateur, si le second résultat de mesure remplit une condition de décision d'événement de mesure, et
à envoyer le premier résultat de mesure à une station de base (30) du système LTE pour une décision de transfert de cellule pour l'équipement utilisateur en fonction du premier résultat de mesure ou à envoyer le second résultat de mesure à la station de base après qu'il est déterminé que le second résultat de mesure remplit la condition de décision d'événement de mesure, ce qui contraint la station de base à prendre une décision de transfert de cellule pour l'équipement utilisateur en fonction du second résultat de mesure.

**2.** Procédé selon la revendication 1, dans lequel la puissance RSRP est une puissance RSRP obtenue par une mesure en fonction d'un signal de référence spécifique à une cellule (CRS) ou une puissance reçue de signal de référence d'informations d'état de canal (CSI-RSRP) obtenue par une mesure en fonction d'un signal de référence d'informations d'état de canal (CSI-RS), dans lequel une valeur de la puissance CSI-RSRP est acquise en effectuant une moyenne linéaire sur la puissance obtenue sur une partie ou la totalité d'éléments de ressources qui transportent un signal de référence d'informations CSI à partir d'un même ensemble de configuration de signal CSI-RS.

**3.** Procédé selon la revendication 1, dans lequel la qualité RSRQ est une qualité RSRQ obtenue par une mesure en fonction d'un signal de référence spécifique à une cellule (CRS) ou une qualité reçue de signal de référence d'informations d'état de canal (CSI-RSRQ) obtenue par une mesure en fonction d'un signal de référence d'informations d'état de canal (CSI-RS), dans lequel une valeur de la qualité CSI-RSRQ est acquise en fonction de N x CSI-RSRP, où N est une largeur de bande de mesure d'un indicateur d'intensité du signal reçu de porteuse dans un système de communication sans fil ou une valeur de la qualité CSI-RSRQ est acquise en fonction de M x CSI-RSRP, où M est une quantité d'éléments RE qui transportent le signal CSI-RS.

**4.** Procédé selon l'une quelconque des revendications 1 à 3, dans lequel l'équipement utilisateur détermine (102), en fonction du premier résultat de mesure de chaque point d'accès (AP), dans les multiples points d'accès, le second résultat de mesure correspondant à l'identifiant PCI selon l'une des manières suivantes :

l'équipement utilisateur sélectionne une valeur maximale parmi un ensemble se composant des premiers résultats de mesure de tous les points d'accès dans les multiples points d'accès en tant que second résultat de mesure correspondant à l'identifiant PCI ; ou l'équipement utilisateur sélectionne une somme pondérée des premiers résultats de mesure de tous les points d'accès dans les multiples points d'accès en tant que second résultat de mesure correspondant à l'identifiant PCI ; ou l'équipement utilisateur sélectionne une espérance mathématique à partir d'un ensemble se composant des premiers résultats de mesure de tous les points d'accès dans les multiples points d'accès en tant que second résultat de mesure correspondant à l'identifiant PCI.

**5.** Procédé selon l'une quelconque des revendications 1 à 4, dans lequel l'identifiant PCI est un identifiant PCI d'une cellule de desserte ou l'identifiant PCI est un identifiant PCI d'une cellule voisine d'une cellule de desserte.

**6.** Équipement utilisateur (20) d'un système LTE, comprenant :

une première unité de détermination (21), configurée pour déterminer un premier résultat de mesure de chaque point d'accès (AP) dans de multiples points d'accès du système LTE, dans lequel les multiples points d'accès ont un même identifiant de cellule physique (PCI) et le premier résultat de mesure est une puissance reçue de signal de référence (RSRP) ou une qualité reçue de signal de référence (RSRQ) ; et
une seconde unité de détermination (22), configurée pour déterminer, en fonction d'une analyse statistique des premiers résultats de mesure des points d'accès dans les multiples points d'accès, un second résultat de mesure des multiples points d'accès correspondant à l'identifiant PCI,
une unité de décision (23), configurée pour déterminer, si le second résultat de mesure remplit une condition de décision d'événement de mesure ; et
une unité d'envoi (24), configurée pour rapporter le premier résultat de mesure à une station de base (30) du système LTE pour une décision de transfert de cellule pour l'équipement utilisateur en fonction du premier résultat de mesure ou le second résultat de mesure à la station de base après que l'unité de décision (23) détermine que le second résultat de mesure remplit la condition de décision d'événement de mesure et, de ce fait, pour contraindre la station de base à prendre une décision de transfert de cellule pour l'équipement utilisateur en fonction du second résultat de mesure.

**7.** Équipement utilisateur selon la revendication 6, dans lequel la première unité de détermination (21) est configurée pour obtenir la puissance RSRP par une mesure, en fonction d'un signal de référence spécifique à une cellule (CRS), ou une puissance reçue de signal de référence d'informations d'état de canal (CSI-RSRP) obtenue par une mesure en fonction d'un signal de référence d'informations d'état de canal (CSI-RS), dans lequel une valeur de la puissance CSI-RSRP est acquise en effectuant une moyenne linéaire sur la puissance obtenue sur une partie ou la totalité d'éléments de ressources qui transportent un signal de référence d'informations CSI à partir d'un même ensemble de configuration de signal CSI-RS.

**8.** Équipement utilisateur selon la revendication 6, dans lequel la première unité de détermination (21) est configurée pour obtenir la qualité RSRQ par une mesure en fonction d'un signal de référence spécifique à une cellule (CRS) ou une qualité reçue de signal de référence d'informations d'état de canal (CSI-RSRQ) obtenue par une mesure en fonction d'un signal de référence d'informations d'état de canal (CSI-RS), dans lequel une valeur de la qualité CSI-RSRQ est acquise en fonction de N x CSI-RSRP, où N est une largeur de bande de mesure d'un indicateur d'intensité du signal reçu de porteuse dans un système de communication sans fil ou une valeur de la qualité CSI-RSRQ est acquise en fonction de M x CSI-RSRP, où M est une quantité d'éléments RE qui transportent le signal CSI-RS.

**9.** Équipement utilisateur selon l'une quelconque des revendications 6 à 8, dans lequel la seconde unité de détermination (22) est spécialement configurée pour déterminer, en fonction du premier résultat de mesure de chaque point d'accès (AP), dans les multiples points d'accès, le second résultat de mesure correspondant à l'identifiant PCI selon l'une des manières suivantes :

la seconde unité de détermination (22) est spécialement configurée pour sélectionner une valeur maximale parmi un ensemble se composant des premiers résultats de mesure de tous les points d'accès dans les multiples points d'accès en tant que second résultat de mesure correspondant à l'identifiant PCI ; ou
la seconde unité de détermination (22) est spécialement configurée pour sélectionner une somme pondérée des premiers résultats de mesure de tous les points d'accès dans les multiples points d'accès en tant que second résultat de mesure correspondant à l'identifiant PCI ; ou
la seconde unité de détermination (22) est spécialement configurée pour sélectionner une espérance mathématique à partir d'un ensemble se composant des premiers résultats de mesure de tous les points d'accès dans les multiples points d'accès en tant que second résultat de mesure correspondant à l'identifiant PCI.

**10.** Équipement utilisateur selon l'une quelconque des revendications 6 à 9, dans lequel l'identifiant PCI est un identifiant PCI d'une cellule de desserte ou l'identifiant PCI est un identifiant PCI d'une cellule voisine d'une cellule de desserte.

**11.** Système de communication LTE comprenant un équipement utilisateur (20) selon l'une quelconque des revendications 6 à 10 et une station de base (30), dans lequel
la station de base (30) est configurée pour recevoir un premier résultat de mesure d'une cellule de desserte ou un second résultat de mesure d'une cellule de desserte en provenance de l'équipement utilisateur (20), et
la station de base (30) est configurée pour recevoir un premier résultat de mesure d'une cellule voisine ou un second résultat de mesure d'une cellule voisine en provenance de l'équipement utilisateur (20), et
la station de base (30) est configurée pour prendre une décision de transfert de cellule en fonction du premier résultat de mesure ou du second résultat de mesure de la cellule de desserte et du premier résultat de mesure ou du second résultat de mesure de la cellule voisine.

A UE determines a first measurement result of each AP in multiple APs, where the multiple APs have a same PCI, and the first measurement result is RSRP or RSRQ

101

The UE determines, according to the first measurement result of each access point in the multiple access points, a second measurement result corresponding to the PCI, where the second measurement result corresponding to the PCI is used for making a measurement event decision

102

FIG. 1

First determining unit — 21

Second determining unit — 22

— 20

FIG. 2

User equipment — 20

Base station — 30

FIG. 3

FIG. 4

**EP 2 911 436 B1**

**REFERENCES CITED IN THE DESCRIPTION**

**Patent documents cited in the description**

- WO 2012124552 A1
- WO 2012134565 A1
- WO 2010140797 A2
- WO 2013138997 A1